# EUROPEAN PATENT APPLICATION

(11) **EP 1 447 002 A1**
(43) Date of publication of application: **18.08.2004**
(21) Application number: 04075484.8
(22) Date of filing: 13.02.2004
(51) Int. Cl.: A01J 5/017

(54) **Device and method for milking animals**

(30) Priority: 15.02.2003 NL 1022699
(71) Applicant: PROLION B.V., 2141 BS Vijfhuizen (NL)
(72) Inventor: Dessing, Jacobus Petrus Maria, 2134 EM Hoofddorp (NL); Nugteren, Robert Jan, Ballantray, Ontario L4A 7X4 (CA); Dronkert, Johannes Adriaan, 3176 VA Poortugaal (NL)
(74) Representative: Uittenbogaart, Gustaaf Adolf

(57) **Abstract**

The invention relates to a device and method for milking animals, in which the milking cups (13) are secured to a milking rack in cup holders (20). In accordance with the invention, the cup holders are designed in such a manner that they hold the milking cups (13) in a horizontal position before they are fitted around the teats. When the milking cups are being fitted around the teat of an animal, the cup holders (20), prior to the fitting operation, move the milking cups (13) from a horizontal position into a vertical position.

## Description

The invention relates to a device in accordance with the preamble of Claim 1. Devices of this type are known. In the known device, the cup holders always hold the milking cups in a more or less vertical position, with the result that they always have to project well above the milking rack and at undesired moments come into contact with the belly or udder of the animal which is to be milked. This can cause dirt to enter the milking cups, which is undesirable.

To avoid this drawback, the device is designed in accordance with the characterizing clause of Claim 1. This results in a low milking rack which can be moved under the animal without touching the udder.

In accordance with a refinement, the device is designed in accordance with Claim 2. This makes it easy to position the milking cup in the cup holder.

In accordance with a further refinement, the device is designed in accordance with Claim 3. This makes it easy to pull the milking hose in order to pull the milking cup into the cup holder.

In accordance with a refinement, the device is designed in accordance with Claim 4. This makes it easy to position the milking cup in the cup holder.

In accordance with a further refinement, the device is designed in accordance with Claim 5. This allows the milking hose and milking cup to be guided without catching or getting stuck.

In accordance with a refinement, the device is designed in accordance with Claim 6. This makes it easy to position the milking cups in the cup holder.

In accordance with a further refinement, the device is designed in accordance with Claim 7. This allows accurate positioning of the milking cup.

In accordance with a refinement, the device is designed in accordance with Claim 8. This means that when the milking device is in use, the milking cup can be moved so that its opening is beneath the teat and then connected automatically by means of a milking robot.

In accordance with a refinement, the device is designed in accordance with Claim 9. This makes it possible to prevent the milking cup from dropping onto the floor after it has slipped off the teat.

The invention also comprises a method in accordance with the preamble of Claim 10. Methods of this type are known in which the milking cups are positioned vertically next to one another on the milking rack, thereby preventing the automatic fitting of the milking cups.

To avoid this drawback, the method is carried out in accordance with the characterizing clause of Claim 10. This means that a milking cup can always be vertically positioned and fitted around a teat one by one, without any load being exerted on the other milking cups on the milking rack during this fitting operation.

In accordance with a refinement, the method is carried out in accordance with Claim 11. Moving the milking rack upwards prior to the fitting of the milking cup makes it possible to use the movement features of the milking robot and allows the milking rack to be of simpler design.

In accordance with a refinement, the method is carried out in accordance with Claim 12. This makes it easy for the milking cup to be lifted out of the cup holder and means that the milking cup can move with respect to the milking rack.

In accordance with a refinement, the method is carried out in accordance with Claim 13. This gives the milking hose more space to move and reduces the forces acting on the udder from the milking cup.

The invention is illustrated below on the basis of an exemplary embodiment and with the aid of a drawing, in which:
Figure 1 shows a diagrammatic plan view of a milking stall with a milking rack,
Figure 2 shows a plan view of a milking rack with milking cups,
Figure 3 shows a perspective view of the milking rack shown in Figure 2 with horizontal milking cups,
Figure 4 shows a perspective view of the milking rack shown in Figure 2 with vertical milking cups,
Figure 5 shows a side view of the milking rack with a horizontal milking cup,
Figure 6 shows a side view of the milking rack with a vertical milking cup,
Figure 7 shows a side view of the milking rack with a hanging milking cup, and
Figure 8 shows a cross section through a combination hose.

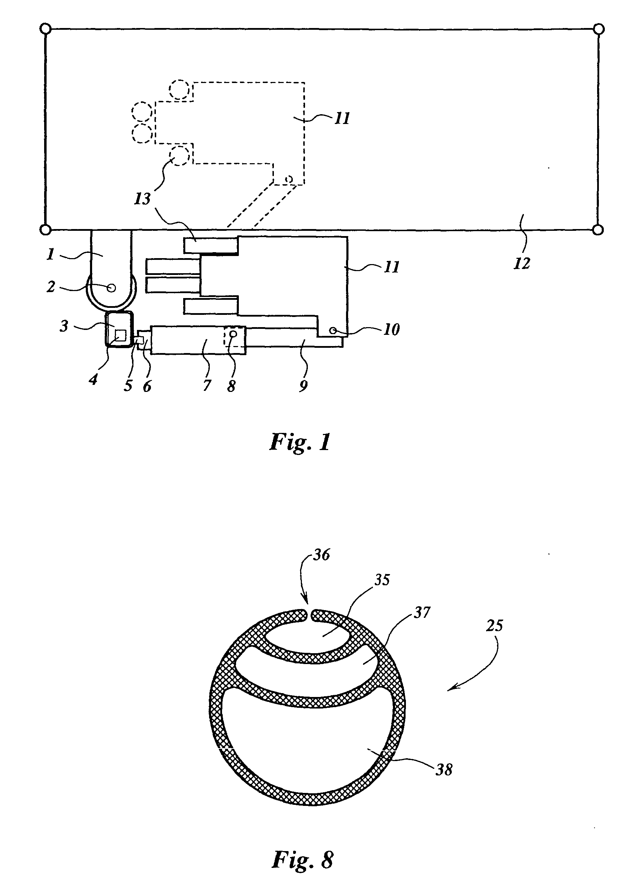

Figure 1 shows a milking stall 12 in which a cow which is to be milked can stand. On account of the fact that the dimensions of the milking stall 12 approximately correspond to those of the cow which is to be milked, the udder of the cow standing in the milking stall 12 is, within certain limits, always in the same location. A milking rack 11 is arranged along the long side of the milking stall 12, outside the milking stall 12 and in the vicinity of the udder. The milking rack 11 can be moved in the horizontal plane and can be positioned in the centre of the milking stall 12, beneath the udder of a cow in the milking stall. On the milking rack 11 there are four milking cups 13, which can be placed around the teats of the udder of a cow which is to be milked and can be used to draw milk in a known way with the aid of milking equipment. It is also possible for the milking rack 11 to be moved in the vertical direction, so that the height can be matched to the height of a cow. If the milking rack 11 is not moved vertically, it will not change height, on account of friction.

To enable the abovementioned positioning of the milking rack 11 to take place, two supports 1, between which there is a vertical sleeve 3, are secured one above the other at the side of the milking stall 12. This sleeve can rotate about a rotation pin 2, for example by virtue of the fact that bearings are secured to the supports 1. A rail 5, over which a carriage 6 can move in the vertical direction, is positioned along one side of the sleeve 3. A first arm 7 is secured to the carriage 6. A second arm 9 is coupled to the end of the first arm 7 by means of a first pivot joint 8. The milking rack 11 is coupled to the second arm 9 by means of a second pivot joint 10. The pivot joints 8 and 10 have a vertical rotation pin, so that the milking rack 11 can move in the horizontal plane, and it can also move about rotation pin 2. To balance out the mass hanging from the carriage, such as the milking rack 11, the first arm 7, the second arm 9 and the carriage 6, a counterweight 4 is arranged in the sleeve 3, the counterweight being connected, by means of a belt (not shown) and via a diverting roll, to the carriage 6. This allows displacement in the vertical direction without difficulty, while the influence of friction means that the height is constant in the absence of any load.

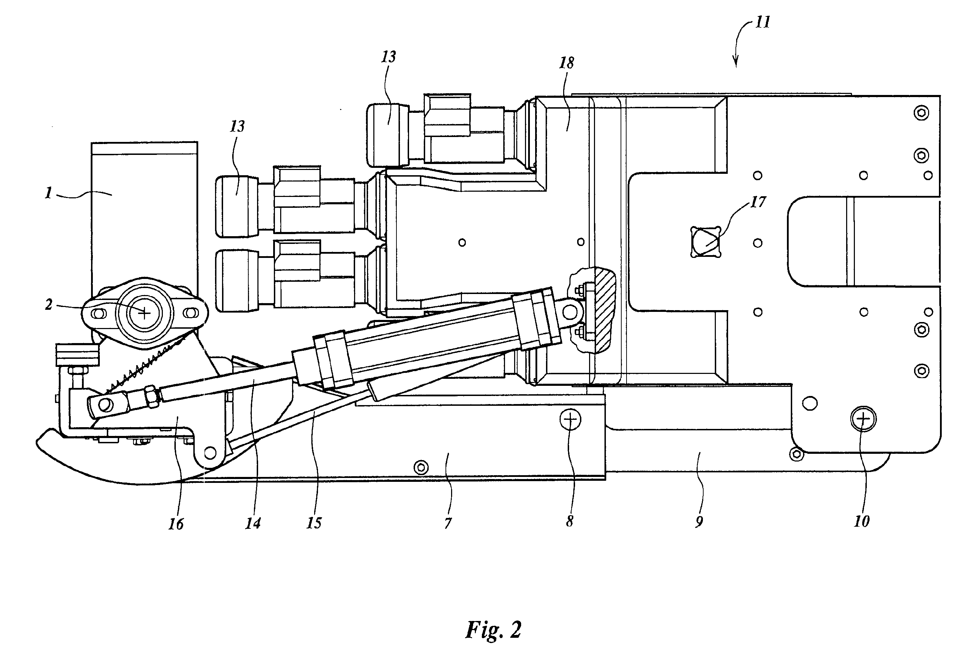

Figure 2 shows the milking rack 11 in more detail. This figure also shows the bearing arrangement by which the sleeve 3 is secured to the frame of the milking stall, and a top plate 16 secured to the sleeve 3. The top plate 16 is coupled to a pneumatic cylinder 14 which is also secured to the frame of the milking stall. When the pneumatic cylinder is being extended, the first arm 7 is rotated into its outermost position parallel to the milking stall 12, with the milking rack 11 being moved outside the milking stall 12. A pneumatic cylinder, which can pull a cord (not shown) and can be used to pull the milking rack 12 onto the first arm 7, is arranged in the first arm 7. In this way, the milking rack 11 is moved into an accurately defined starting position outside the milking stall 12. In an embodiment in which the milking rack 11 is moved under a cow which is to be milked by a milking robot, the milking rack 11 is now in a position in which a gripper of the milking robot can be moved towards a gripper pin 17 and can take hold of the milking rack. A damper 15 is also arranged between the top plate 16 and the securing point of the pneumatic cylinder 14 on the frame of the milking stall, the damper 15 being arranged in such a manner that it greatly damps the rotation of the first arm 7 about the rotation pin 2 when the first arm 7 reaches the starting position outside the milking stall 12 and scarcely damps the movement of the first arm 7 when the milking rack 11 has been positioned beneath the cow to be milked. As a result, the milking rack 11 is decelerated in the vicinity of the starting position when the pneumatic cylinder 14 is being extended, whereas the movement of the milking rack 11 beneath the cow 13 is scarcely checked by the damper 15.

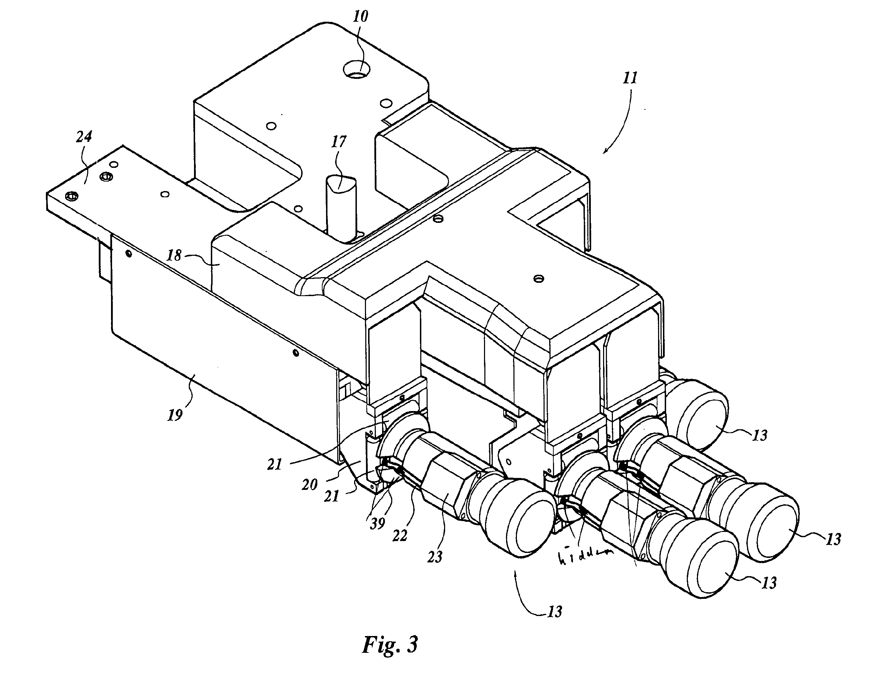

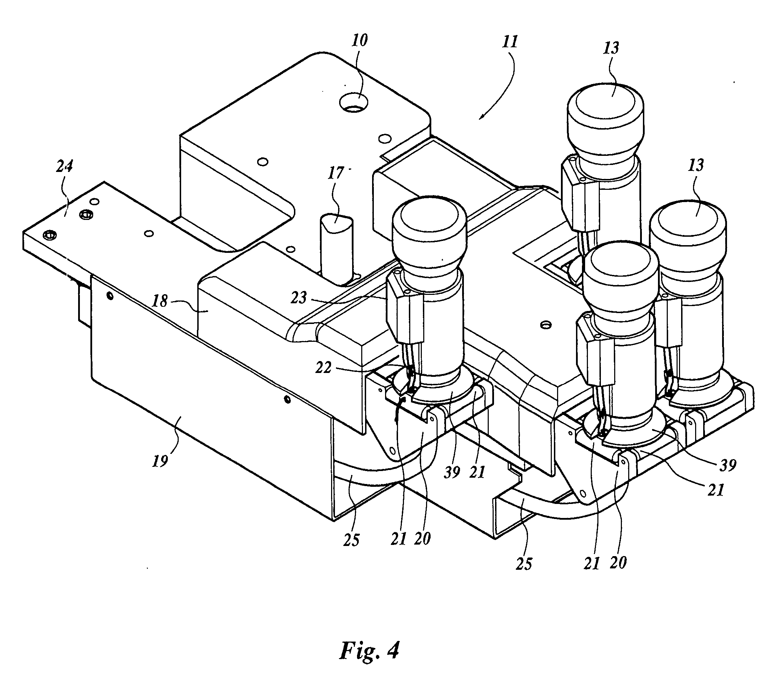

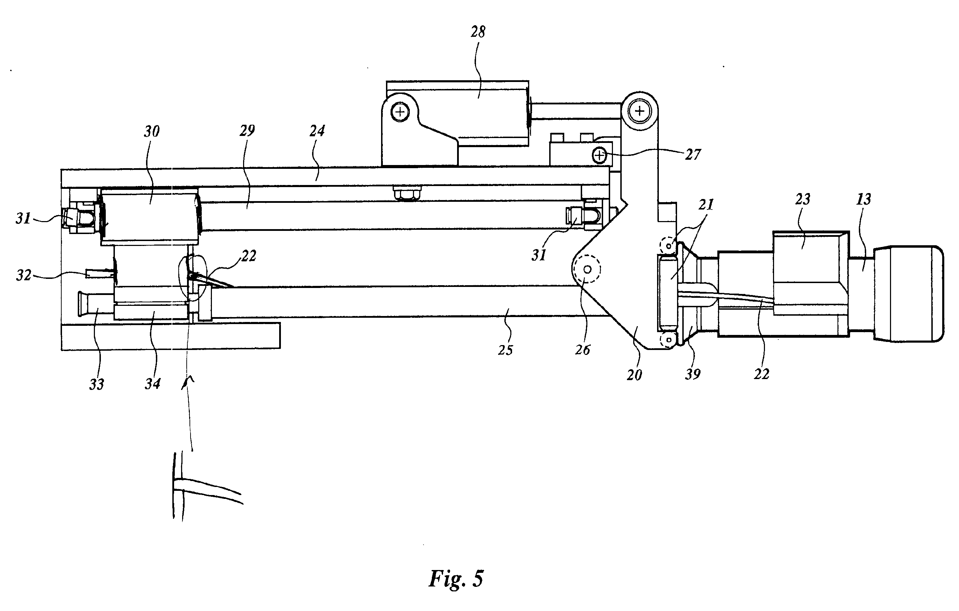

Figures 3 and 4 show the milking rack 11 with the milking cups 13, Figure 3 showing the milking cups 13 in a horizontal position, while Figure 4 shows the milking cups 13 in a vertical position when they are ready to be connected to the teats of the udder of the cow which is to be milked. The milking cups 13 are pulled onto positioning rolls 21 by a combination hose 25. The positioning rolls 21, which are arranged in a square and interact with a supporting rim 39 of the milking cup 13, are secured in a cup holder 20. The cup holder 20 is secured, by means of a movement mechanism (cf. Figures 4 and 5), to a plate 24, and the movement mechanism is covered by a covering cap 18 and a cover plate 19.

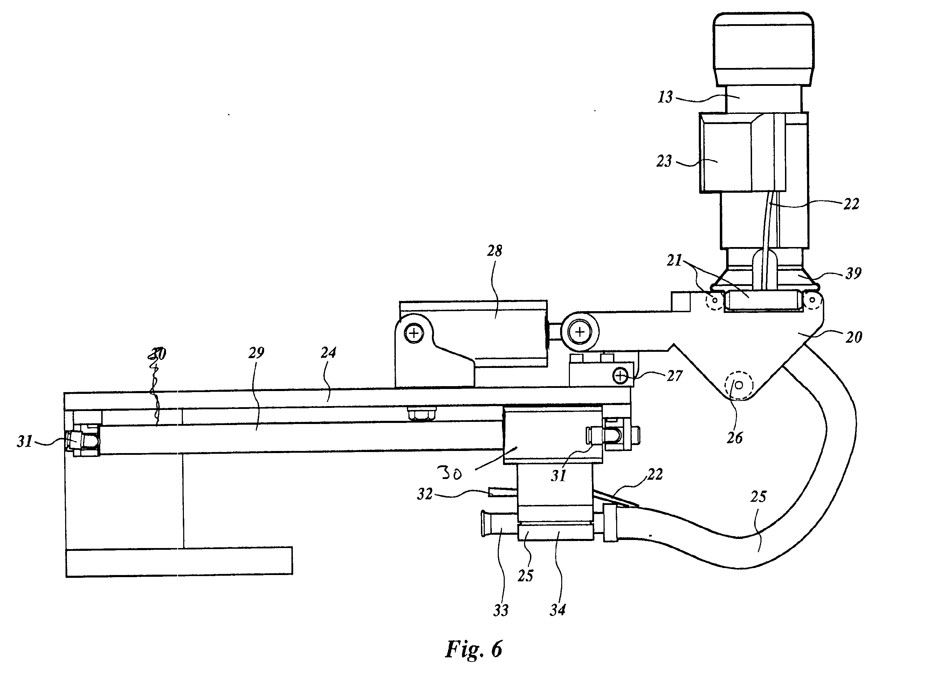

Figures 5 and 6 show the movement mechanism which can be used to tilt the milking cup 13 from the horizontal position to the vertical position. The cup holder 20 is secured to the plate 24 by means of a tilting pin 27. A pneumatic cylinder 28, which can be used to move the cup holder 20 in such a manner that the milking cup 13 supported against the positioning rolls 21 tilts, is secured between the cup holder 20 and the plate 24.

In Figure 5, the milking cup 13 is horizontal and the supporting rim 39 is pulled onto the four positioning rolls 21 by the combination hose 25. For this purpose, the combination hose 25 is secured to a coupling piece 34 which is secured to a piston carriage 30. The piston carriage 30 surrounds a cylinder 29 along which it can slide. A piston can move inside the cylinder 29 under the influence of compressed air which can be supplied via compressed-air connections 31. The piston is magnetically coupled to the piston carriage 30. Activation of the pneumatic cylinder 28 causes the cup holder 20 together with the milking cup 13 to tilt. In this context, it is important for the tensile force in the combination hose 25 with which the milking cup 13 is pulled onto the rolls not to be excessive. During tilting, the air pressure in the cylinder 29 can be reduced for this purpose. Under the influence of the tensile force in the combination hose 25, which is now being pulled around a guide roll 26, the milking cup 13 is pulled onto the positioning rolls 21. In this position, the tensile force in the combination hose can be completely eliminated on account of the fact that the milking cup 13 rests on the positioning rolls 21 under the influence of its own weight.

Figure 6 shows how the piston carriage 30, just before the milking cup 13 is placed around a teat, can be moved towards the milking cup 13, with the result that there will no longer be any force on the combination hose 25 and the milking cup 13 can be lifted off the cup holder 20.

The combination hose 25 has a passage 38 which functions as a milk line (cf. Figure 8) and a passage 37 which functions as a pulsating line. In the coupling piece 34, passage 38 is connected to a milk hose connection 33 and passage 37 is connected to a pulsation connection 32. A milking machine (not shown) is connected, in a known way, to the milk hose connection 33 and the pulsation connection 32.

A sensor which can detect whether there is a teat in the milking cup 13 is installed in the milking cup 13. A sensor of this type is known and operates, for example, on the basis of a change in the capacitance of a capacitor plate fitted around a teat opening. The electronics required for this purpose are positioned in a casing 23 mounted on the milking cup 13. These electronics are connected to the control unit of the device via a cable 22. As shown in Figure 8, the cable 22 runs via an opening 36 in a cable duct 35 which is arranged in the combination hose 25, so that the latter can move without obstacle along the positioning rolls 21 and/or the guide roll 26 and the supporting rim can be accurately supported on the positioning rolls 21. As an alternative to the combination hose 25, it is also possible to use separate hoses for the milk line and pulsating line and a cable, which hoses are then wrapped up together and can jointly exert the tensile force on the milking cup 13. In general, the milk line will be the determining factor in the tensile force, since this is the line which has to be heaviest.

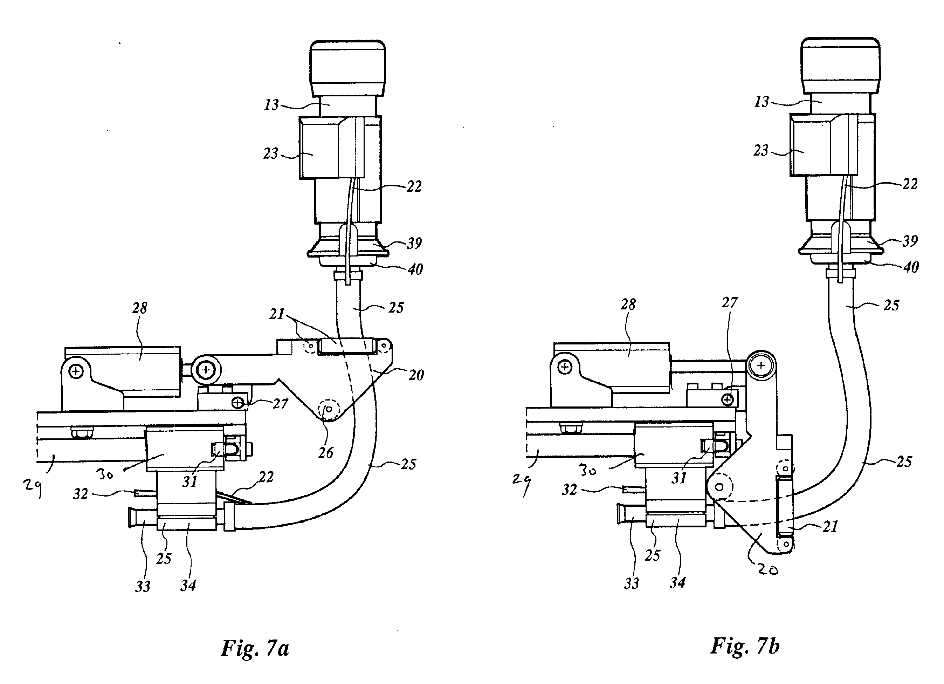

Figure 7a shows how the milking cup 13 has been lifted out of the cup holder 20 and can hang from a teat. A cylindrical part 20 of the milking cup 13, which together with the supporting rim ensures accurate positioning on the positioning rolls 21, is also shown in this figure. The diameter of the cylindrical part 20 is such that it bears against the positioning rolls 21. It is clearly apparent from this figure that even in the situation shown, when the cup holder 20 is still in its highest position, the milking cup 13 still has a considerable freedom of movement. When the teat has been moved into the milking cup 13, this is detected by the sensor which is present for this purpose in the milking cup 13. Then, a signal is generated in the control unit, with the result that the cup holder 20 moves downwards, as shown in Figure 7b. It will be clear that in this position the milking cups 13 can move without obstacle with respect to the milking rack 11 and the animal which is to be milked will be subject to scarcely any discomfort.

A number of examples of use of the invention will now follow.

If the milking rack 11 forms part of a milking device in which the milking cups 13 are fitted around the teats by hand, the milking rack 11 will be moved under the animal to be milked with the milking cups 13 in a vertical position. In this case, when the milking rack 11 is in the at-rest position, the milking cups 13 can be horizontal and can be moved into the vertical position before being moved under the animal or while they are being moved under the animal. This movement may also take place just before fitting of the milking cups 13. When the milking cups 13 have been fitted, the coupling piece 34 will be moved towards the milking cup 13, so that the combination hose 25 hangs without tension. The operator then fits the milking cups 13 one by one, and each time the teat is detected in a milking cup 13, the cup holder 20 will move downwards, in the manner described above. During the milking operation and in particular when the udder is empty, it may be advantageous for the milking cup 13 to be pulled downwards slightly. This can be achieved by the coupling piece 34 being moved away from the milking cup 13, with the result that the combination hose 25 will pull the milking cup 13 downwards. The air pressure in cylinder 29 and therefore the force on the milking cup 13 may if appropriate be adjustable as a function of animal, time instant or milking duration. At the end of the milking operation, the milking cups 13 can automatically be removed from the teats as a result of the coupling pieces 34 being moved away from the milking cups 13 and the vacuum in the milk line being reduced or atmospheric air being fed into the milk line. The milking cups 13 will then drop off the teats and be pulled into the cup holder 20 by the combination hose 25. Then, the milking rack 11 is pulled out of the milking stall 12 in the manner described above, inter alia by the pneumatic cylinder 14, and the milked cow can leave the milking stall 12.

If, during milking, a milking cup 13 drops off a teat, this is detected by the sensor in the milking cup 13. Rapid switching means that the air supply to the cylinder 29 is activated within 0.1 second, and the milking cup 13 is pulled into the cup holder 20 before the opening of the milking cup 13 has dropped onto the ground. Then, the operator is warned, so that he can reattach the milking cup 13. If appropriate, the other milking cups are also removed first of all and then all the milking cups 13 are reattached.

If the milking rack 11 forms part of a device with which the milking cups are automatically fitted around the teats by a milking robot, a different method will be used. The milking rack 11 is gripped by the milking robot about the gripper pin 17 and moved under the udder with the milking cups 13 in a horizontal position. After the position of a teat has been recognized in the control unit of the milking robot, the associated milking cup 13 is moved into the vertical position. Then, the milking rack 11 is moved upwards by the milking robot, and the milking cup 13 is fitted around the teat. If appropriate, the coupling piece 34 has previously been moved towards the milking cup 13, so that the combination hose 25 is free from load. When the teat is detected in the milking cup 13, the milking robot moves the milking rack 11 downwards and pivots the cup holder 20 downwards, after which the milking cup 13 is attached to the milking rack 11 only by means of the sufficiently long combination hose 25. Then, the position of a subsequent teat is detected and the next milking cup 13 is moved into the vertical position and towards the teat. In this way, the four milking cups 13 are successively fitted around the teats. The milking robot can then be detached from the milking rack 11 and can move to the next milking stall 12 and/or milking rack 11.

In the automatic milking device described above, in the at-rest position the milking cups 13 will generally be horizontal and will only be moved into the vertical position just before being fitted around a teat. However, installations of this type are generally also provided with a flushing device for flushing the milking cups 13 clean on the inside using jet means. In an embodiment with four jet means, the latter are assembled on a plate which can move vertically. The milking cups 13 are placed in the vertical position and the plate with jet means is placed onto the milking cups, after which the milking cups 13 are cleaned on the inside and if appropriate also to some extent on the outside.

## Claims

1. Device for milking animals, comprising milking cups (13), milking hoses (25) for conveying milk out of the milking cups, cup holders (20) for holding the milking cups in position when the milking cups are not in use, and a milking rack (11) to which the cup holders are secured, **characterized in that** the cup holders (20) can hold the milking cups (13) horizontally.

2. Device according to Claim 1, in which the milking rack (11) is provided with tensioning means (29, 30, 34) for pulling a milking cup (13) by a milking hose (25) in the associated cup holder (20).

3. Device according to Claim 2, in which the tensioning means comprise a coupling piece (34) which is secured to the milking hose (25) and can move in the horizontal direction.

4. Device according to Claim 1, 2 or 3, in which the milking hose (25) secured to a milking cup (13) is guided through an opening in the cup holder (20), which opening is surrounded by positioning means (21).

5. Device according to Claim 4, in which the positioning means comprise positioning rolls (21) for guiding the milking hose (25) and holding the milking cup (13) in position.

6. Device according to one of the preceding claims, in which the milking cups (13) are provided with a supporting rim (39) which can rest against positioning rolls (21) of the cup holder (20).

7. Device according to Claim 6, in which the milking cup (13), in the vicinity of the supporting rim (39), has a cylindrical part (40) which, during positioning in the cup holder (20), is in contact with at least three positioning rolls (21).

8. Device according to one of the preceding claims, in which the cup holder (20) is tiltable in order for the milking cup (13) to be moved into the vertical position.

9. Device according to one of the preceding claims, in which the milking cup has a sensor for detecting a teat in the milking cup (13) and means for the rapid activation of the tensioning means (29, 30, 34) if the detection of the teat ends during milking.

10. Method for automatically milking an animal using a milking device having milking cups (13) which are fitted around a teat of the animal by a milking robot, the milking robot moving a milking rack (11), and milking cups being secured to the milking rack (11) in cup holders (20), **characterized in that** prior to the fitting of a milking cup (13), the cup holder (20) moves the milking cup (13) from a horizontal position into a vertical position.

11. Method according to Claim 10, in which the milking robot moves the milking rack (11) upwards and thereby positions the milking cup (13) around the teat.

12. Method according to Claim 10 or 11, in which, after a teat has been detected in the milking cup (13), the milking robot moves the milking rack (11) downwards.

13. Method according to Claim 10, 11 or 12, in which, after a teat has been detected in the milking cup (13), the cup holder (20) moves downwards and optionally sideways with respect to the milking rack (11).
